# EUROPÄISCHE PATENTSCHRIFT

(11) **EP 1 075 892 B1**
(45) Veröffentlichungstag und Bekanntmachung des Hinweises auf die Patenterteilung: **24.05.2006**
(21) Anmeldenummer: 00116766.7
(22) Anmeldetag: 03.08.2000
(51) Int. Cl.: B23K 31/12

(54) **Verfahren und Messeinrichtung zur Online-Prüfung der Qualität einer Roll- bzw. Quetschschweissnaht von miteinander verbundenen Blechen**
Method and measuring appartus for the on-line quality control of a roll or press seam weld of assembled sheets
Méthode et appareil de mesure pour contrôler la qualité du soudage par pression ou par rouleaux de tôles assemblées

(30) Priorität: 13.08.1999 DE 19938509
(43) Veröffentlichungstag der Anmeldung: 14.02.2001
(73) Patentinhaber: ThyssenKrupp Steel AG, 47166 Duisburg (DE)
(72) Erfinder: Bosch, Frank, 47647 Kerken (DE); Schwanke, Günter, Dipl.-Phys., 46044 Oberhausen (DE)
(74) Vertreter: Cohausz & Florack

(56) Entgegenhaltungen:
- EP-A- 0 512 972
- EP-A- 0 554 888
- EP-A- 0 655 294
- ATTORRE ET AL.: "determining resistance weld interface heat distribution by thermal imaging" WELDING REVIEW INTERNATIONAL , Bd. 00, Nr. 00, März 1997 (1997-03), Seiten 160-164, XP000691159

## Beschreibung

Um die Qualität einer Roll- bzw. Quetschschweißnaht an miteinander verbundenen Blechen beziehungsweise Bändern zu beurteilen, ist es in der Praxis üblich, ein Blechstück mit der Schweißnaht auszustanzen und dieses Blechstück einer Biegeprüfung zu unterwerfen. Diese Prüfmethode hat eine Reihe von Nachteilen: Sie ist nicht zerstörungsfrei. Es wird nur ein Teil der Schweißnaht überprüft. Die Prüfung dauert lange und ist recht aufwendig.

Dagegen gibt es schon seit längerem Verfahren zur Online-Prozeß- und Qualitätskontrolle an lasergeschweißten Stumpfnähten von Blechen (EP 0 655 294 B1). Bei diesem bekannten Verfahren wird an mindestens zwei Stellen hinter der Schweißzone gleichzeitig und beidseits der Fügelinie die Temperatur mittels Pyrometer gemessen. Die Meßwerte der einzelnen Pyrometer werden miteinander in bezug gebracht. Sinnvolle Verknüpfungen wie Summen-, Differenz- oder Quotientenbildung stehen als Standardroutinen für die Auswertung und Fehlerinterpretation zur Verfügung. Ob dieser druckschriftlich bekannte Stand der Technik auch Eingang in die Praxis gefunden hat, ist mehr als fraglich, weil beim Laserstrahlstumpfschweißen wegen der Konzentration des Wärmeeintrags auf einen äußerst schmalen Bereich die Ausdehnung wärmebeeinflußter Zonen mit durch in Pyrometer meßbaren Werten zu klein sein dürfte. Aus diesem Grund sind die Verhältnisse beim Laserstumpfschweißen auch nicht mit denen beim Widerstandsschweißen, insbesondere Roll- und Quetschnahtschweißen vergleichbar.

D. R. Attorre et al. weisen in "Determining resistance weld interface heat distribution by thermal imaging" - (WELDING REVIEW INTERNATIONAL, März 1997, Seiten 160 - 164), das als nächsliegender Stand der Technik angesehen wird, nach, daß mittels Wärmebildaufnahmen in Echtzeit die Wärmeentwicklung und -verteilung u. a. in einer Rollschweißnaht verfolgt werden kann. Durch die damit verbundene Möglichkeit, die Schweißparameter im Hinblick auf eine optimale Wärmeverteilung in der Schweißzone einzustellen, ist ein Verfahren gegeben, mit dessen Hilfe eine Online-Prüfung der Qualität einer Rollschweißnaht durchführbar ist. Dazu wird die Temperatur entlang der Blechkante in einem Abstand von ca. 2 mm vom Zentrum der Schweißelektrode ermittelt, um in Schweißrichtung ein Profil der Temperaturverteilung zu erstellen. Allerdings ist laut Attorre et al. nur ein Pyrometer vorgesehen, weshalb die für den praktischen Einsatz notwendigen Informationen zur Steuerung einer Schweißeinrichtung zwar schnell ermittelbar, für eine optimale Qualitätserfassung aber nicht vollständig und/oder nur aufwendig zu bestimmen sind.

Der Erfindung liegt die Aufgabe zugrunde, ein Prüfverfahren für die Qualität von Rollschweißnähten und eine dafür geeignete Meßvorrichtung zu entwickeln, die ein schnelles, zerstörungsfreies und vollständiges Überprüfen der Rollschweißnaht ermöglicht.

Diese Aufgabe wird verfahrensmäßig mit einem Verfahren zur Online-Prüfung der Qualität einer Rollschweißnaht von miteinander verbundenen Blechen oder Bändern,bei dem
a) mit einem ersten Pyrometer die Temperatur eines in fester geometrischer Beziehung zum wandernden Schweißort gehaltenen und auf der Schweißnaht liegenden Meßbereiches erfaßt wird, gelöst,
   das dadurch gekennzeichnet ist, daß
b) gleichzeitig mit einem zweiten und einem dritten Pyrometer die Temperaturen von in fester geometrischer Beziehung zum wandernden Schweißort gehaltenen und unmittelbar daneben und beidseitig der Schweißnaht außerhalb ihrer Aufschmelzzone liegenden Meßbereichen erfaßt, die in von der Schweißwärme beeinflußten Zonen liegen,
c) und die Temperaturmeßwerte der einzelnen Pyrometer jeweils durch Vergleich mit entsprechenden Sollwerten und unter Heranziehung charakteristischer Temperaturverlaufmuster für qualitativ einwandfreie Schweißnähte und zusätzlich die des zweiten und dritten Pyrometers durch Vergleich ihre Verläufe ausgewertet werden, wobei Fehler nach verschiedenen Typen unterschieden werden.

Bei dem erfindungsgemäßen Verfahren wird allein durch die Beobachtung der Temperaturen in drei in definierter Lage zum Schweißort liegenden Bereichen, und zwar in dem auf der Schweißnaht und in unmittelbarer Nähe des Schweißortes liegenden Bereich und den zu beiden Seiten der Schweißnaht in den wärmebeeinflußten Zonen und ebenfalls in der Nähe des Schweißortes, allerdings außerhalb der Aufschmelzzone liegenden Bereichen es ermöglicht, schnell, zerstörungsfrei und vollständig die Schweißnaht zu überprüfen. Durch eine geeignete Software, die teils aus Erfahrungswerten, teils aus gezielten Betriebsversuchen und teils aus Wärmeflußbetrachtungen für verschiedene Fehler programmiert ist, läßt sich sogar eine Aussage über die Art der Fehler machen, sei es, daß es sich um mechanische Einstellfehler, sei es, daß es sich um schweißmaschinenbedingte Fehler handelt. Über die ortsunabhängige Erkennung von Temperaturverlaufsmustern lassen sich online vor allem durch die Schweißmaschine bedingte Fehler erkennen. In der Regel treten beim Schweißen unterschiedliche Fehler sporadisch auf. Kommt es zu einer Häufung eines bestimmten Fehlertyps, dann bedeutet das in der Regel, daß ein Fehler der Schweißmaschine vorliegt.

Betriebsversuche haben gezeigt, daß für qualitativ nicht einwandfreie Schweißnähte auch charakteristisch ist, wenn sich die Verläufe der Temperaturmeßwerte des zweiten und dritten Pyrometers nicht schneiden. Deshalb ist nach einer Ausgestaltung der Erfindung vorgesehen, daß das zweite und dritte Pyrometer in bezug auf die Schweißnaht derart positioniert und eingestellt werden, daß bei qualitativ einwandfreien Schweißnähten die Verläufe der Temperaturmeßwerte einen Schnittpunkt haben.

Nach einer weiteren Ausgestaltung der Erfindung ist vorgesehen, daß bei der Auswertung aus den Temperatur-und Meßwerten des zweiten und des dritten Pyrometers ein Mittelwert gebildet wird. Diese Ausgestaltung ist vorteilhaft bei durchlaufenden Bändern, bei denen das Bandende des einen Bandes an den Bandanfang des nächsten Bandes angeschweißt wird. Erfahrungen mit solchen Bändern haben nämlich gezeigt, daß die Wärmeeinflußzone auf der Seite des Bandendes in Schweißrichtung größer wird, während sie auf der Seite des Bandanfanges schmaler wird. Durch die Mittelwertbildung werden diese Unterschiede ausgeglichen, was für die Auswertung von Vorteil ist.

Für die Auswertung ist es weiter von Vorteil, wenn die Meßbereiche der Pyrometer nicht allzu groß sind. Geeignete Werte des mittleren Durchmessers liegen zwischen 3 und 5 mm.

Insbesondere für die Mittelwertbildung der Temperaturmeßwerte des zweiten und des dritten Pyrometers ist es vorteilhaft, wenn deren Meßbereiche gleich groß sind.

Eine Meßeinrichtung zur Online-Prüfung der Qualität von Rollschweißnähten von miteinander verbundenen Blechen beziehungsweise Bändern, die zur Durchführung des vorgenannten Verfahrens geeignet ist, ist dadurch gekennzeichnet, daß ein Träger für ein Schweißrad einer Rollnahtschweißmaschine drei Pyrometer aufweist, von denen eines auf die zu schweißende Naht und die beiden anderen auf die der Schweißnaht benachbarten Wärmeeinflußzonen einstellbar sind und die ihre Temperaturmeßwerte an eine Auswerte- und Anzeigeeinrichtung liefern. Um den Meßvorgang einzuleiten und zu beenden, ist nach einer Ausgestaltung der Erfindung vorgesehen, daß die Auswerte- und Anzeigeeinrichtung in Abhängigkeit von dem Temperaturmeßwert des Pyrometers für die Schweißnaht ein Start-/Stopsignal erzeugt.

Im folgenden wird die Erfindung anhand einer ein Ausführungsbeispiel mit verschiedenen Diagrammen darstellenden Zeichnung näher erläutert. Im einzelnen zeigen:
- Figur 1: eine Rollnahtschweißmaschine bei der Herstellung einer zwei Bänder miteinander verbindenden Schweißnaht inperspektivischer Darstellung,
- Figur 2: einen Bandausschnitt mit drei eingestellten Pyrometern in schematischer und perspektivischer Darstellung,
- Figur 3: einen Bandausschnitt mit Schweißnaht und drei eingestellten Pyrometern in Aufsicht,
- Figur 4: ein Diagramm mit dem zeitlichen Verlauf der Temperatur in der Schweißnaht und den beiden dazu benachbarten Wärmeeinflußzonen bei fehlerfreier Maschineneinstellung und fehlerloser Schweißnaht,
- Figur 5: den zeitlichen Temperaturverlauf der Schweißnaht und der Wärmeeinflußzonen bei fehlerfreier Maschineneinstellung ,
- Figuren 6-8: drei Diagramme für einen zeitlichen Verlauf der Temperatur der Schweißnaht und der beiden benachbarten Wärmeeinflußzonen für fehlerhafte Maschineneinstellung und/oder fehlerhafter Schweißnaht.

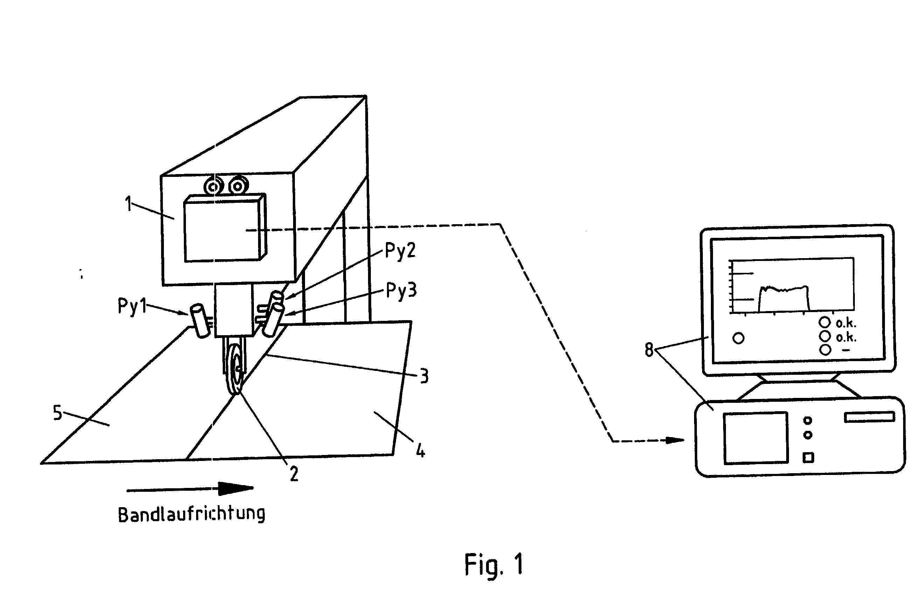

Die in Figur 1 dargestellte Schweißvorrichtung für Rollnahtschweißen trägt an einem oberen Arm 1 ein Schweißrad 2, mit dem eine Schweißnaht 3 als Verbindung zwischen zwei einander überlappenden Bändern 4,5 hergestellt wird. Der Arm 1 trägt ferner drei Pyrometer Py1,Py2,Py3, die mit ihren Optiken auf die Schweißnaht 3 und die beiden neben dem aufschmelzenden Bereich der Schweißnaht liegenden sichtbaren Wärmeeinflußzonen 6,7 eingestellt werden können. Die Temperaturmeßwerte dieser drei Pyrometer Py1,Py2,Py3 werden einer Auswerte- und Anzeigeeinrichtung 8 geliefert. Die Software dieser Auswerte- und Anzeigeeinrichtung 8, die auf der Basis von Erfahrungswerten für fehlerfreie und fehlerbehaftete Einstellungen der Schweißvorrichtung und Schweißnähte programmiert ist, wertet die Temperaturmeßwerte aus und bringt die Auswertung zur Anzeige. Bei der beschriebenen Programmierung werden auch die Fehlerarten angezeigt.

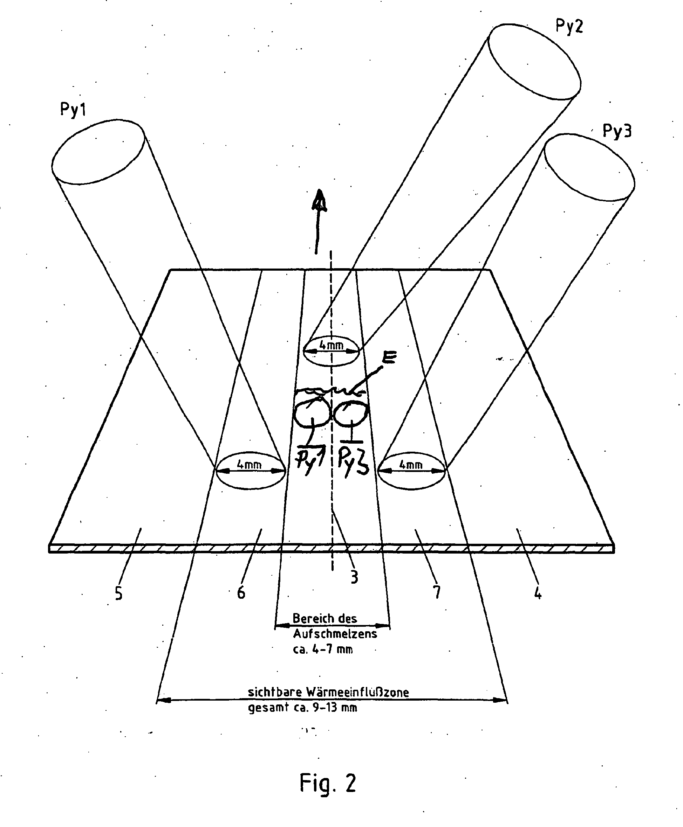

In Figur 2 ist schematisch dargestellt, wie die einzelnen Pyrometer Py1-Py3 mit ihren Optiken auf die Schweißnaht 3 und die beiden benachbarten Wärmeeinflußzonen 6,7 eingestellt sind. Die genaue Einstellung kann mittels eines einem jeden Pyrometer Py1-Py3 zugeordneten Lasers vorgenommen werden. Der Pyrometer Py2 ist zentral auf die Schweißnaht 3 eingestellt und deckt mit seinem Meßbereich im wesentlichen den aufschmelzenden Bereich der Schweißnaht 3 möglichst nahe am Kontaktpunkt des Schweißrades 2 ab, während die beiden anderen Pyrometer Py1,Py3 mit ihren Meßbereichen die angrenzenden Wärmeeinflußzonen 6,7 abdecken. Wichtig ist, daß die räumliche Beziehung zwischen den Meßbereichen der einzelnen Pyrometer Py1-Py3 und dem Schweißrad 2 während des Meßvorganges erhalten bleiben. Bei einer einmal vorgenommenen Einstellung vor der Messung bleibt diese Beziehung erhalten, weil die Pyrometer Py1-Py3 vom Arm 1 des Schweißrades 2 getragen werden.

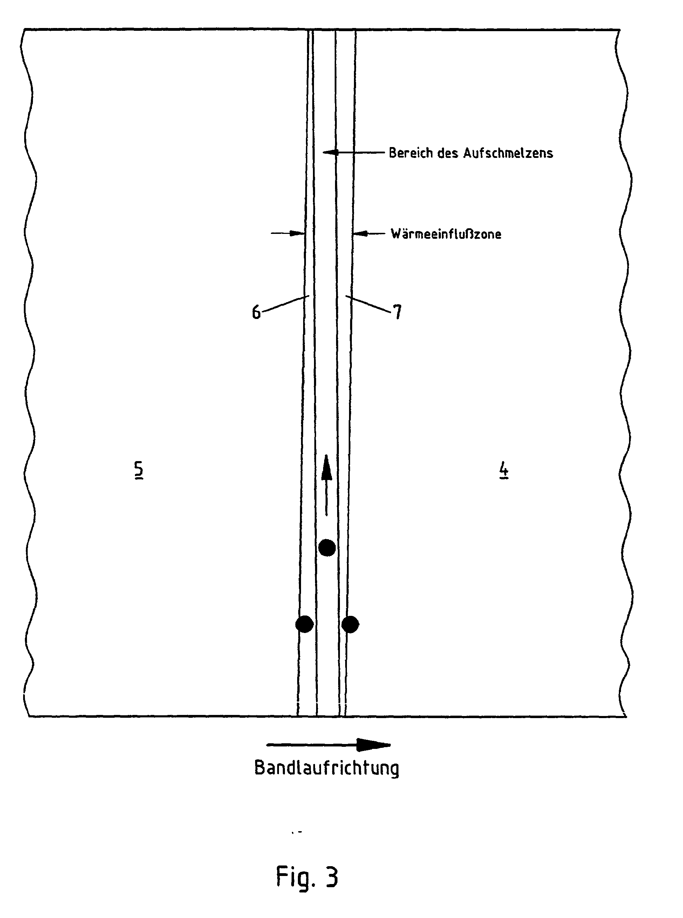

In Figur 3 ist stark übertrieben dargestellt, daß bei einem durchlaufenden Band die dem auslaufseitigen Bandende zugewandte, der Schweißnaht 3 beziehungsweise dem aufgeschmolzenen Bereich benachbarte Wärmeeinflußzone 7 in Schweißrichtung breiter wird, während die dem Bandanfang einlaufseitig zugewandte Wärmeeinflußzone 6 schmaler wird. Das erklärt sich damit, daß an der Schweißmaschine durch Verschränkung der der zu verschweißenden Bleche der Überlappungsbereich in Schweißrichtung kontinuierlich linear zunimmt und damit den Wärmeeintrag beeinflußt.

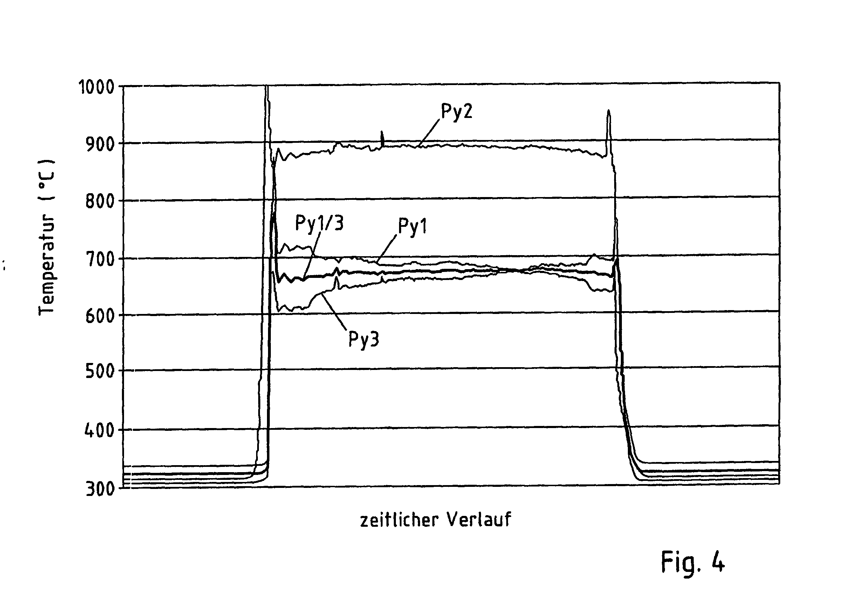

Dazu ist in dem Diagramm der Figur 4 der zeitliche Temperaturverlauf für eine fehlerlose Schweißnaht und fehlerfreie Maschineneinstellung dargestellt. Wie zu erkennen ist, steigt die Temperatur für das Pyrometer Py3 an und fällt für das Pyrometer Py1. Der Mittelwert ist im wesentlichen gleich und liegt im Toleranzbereich von z.B. 600 bis 700 °C. Beide Verläufe der Temperaturmeßwerte schneiden sich. Damit sind zwei wesentliche Kriterien für eine fehlerfreie Schweißnaht erfüllt. Auch die vom Pyrometer 2 gemessenen Temperatur der Nahtmitte hat einen stetigen Verlauf, und zwar ist sie im wesentlichen konstant. Damit ist ein weiteres Kriterium für eine fehlerfreie Naht erfüllt. Selbst ein leichter, stetiger Temperaturanstieg wäre unkritisch, weil dieser darauf zurückzuführen wäre, daß während des Schweißens die Temperatur des Schweißrades zunimmt.

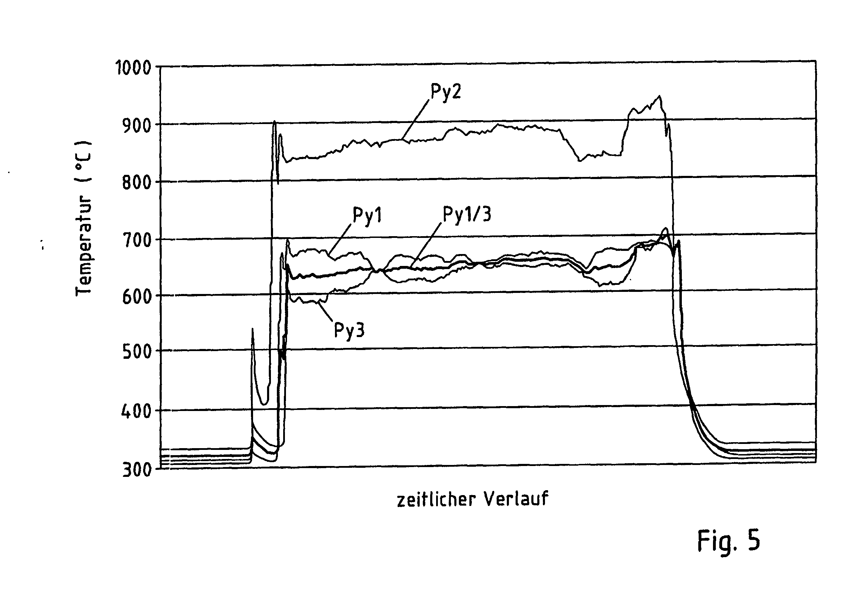

Das Diagramm der Figur 5 zeigt einen im Toleranzbereich liegenden Verlauf der von den Pyrometern 1 und 3 gemessenen Temperaturen mit vor allem einer im Toleranzbereich liegenden Mitteltemperatur und auch einen Schnittpunkt der Temperaturverläufe, doch sind diese verglichen mit denen des Diagramms der Fig.4 sehr unruhig, was auf eine fehlerhafte Schweißnaht hindeutet, aber noch nicht eindeutig ist. Eindeutig für einen Fehler ist jedoch der sprunghafte Verlauf der vom Pyrometer Py2 gemessenen Temperatur gegen Ende der Schweißnaht. Dies ist auf einen Maschinenfehler zurückzuführen, und zwar auf ein loses Schweißrad. Das führt zu einer fehlerhaften Naht, die beim Biegeversuch bricht.

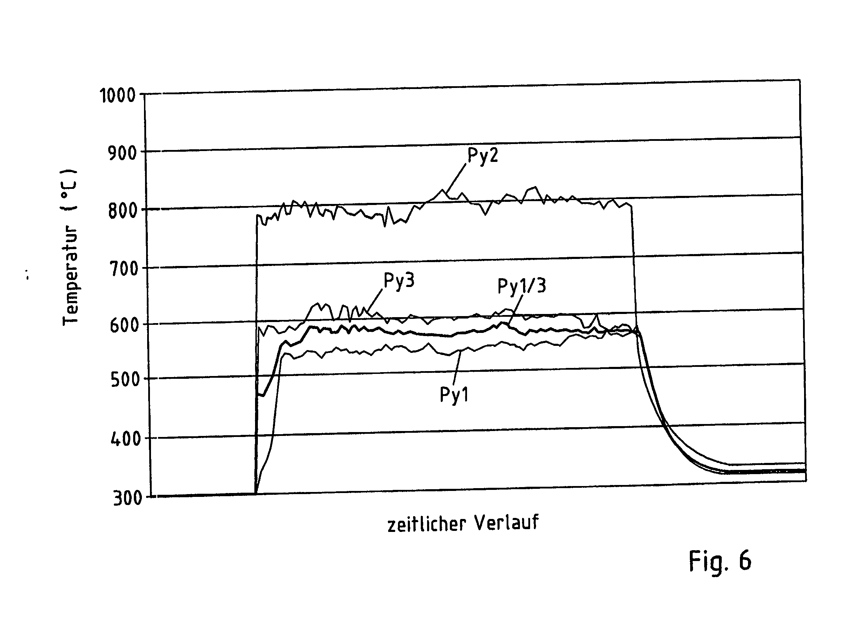

Bei dem Diagramm der Figur 6 liegen sowohl die Temperatur für die Schweißnaht 3 als auch der Mittelwert der Temperatur für die der Schweißnaht 3 benachbarten Wärmeeinflußzonen 6,7 unterhalb der Schwellen von 800 beziehungsweise 600°C. Dies sind Zeichen für eine nicht ordnungsgemäße Schweißnaht. Ein Unterschreiten der Schwelle von 600°C ist ein Zeichen für eine zunehmende Bruchgefahr der Schweißnaht.

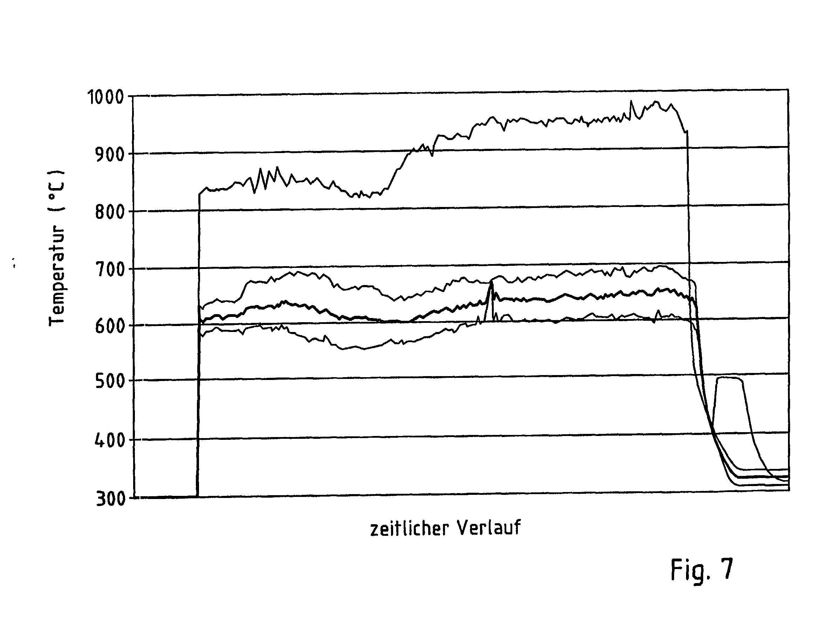

Der zeitliche Verlauf der Temperatur sowohl in der Schweißnaht als auch in den benachbarten Wärmeeinflußzonen bei dem Diagramm der Figur 7 weicht völlig von den vorgegebenen Sollwertverläufen ab. Solche Verläufe sind typisch für mangelnde Überlappung oder Verschränkung der miteinander zu verbindenden Bleche. Bei einem Biegeversuch einer solchen Probe würde ein Bruch entstehen.

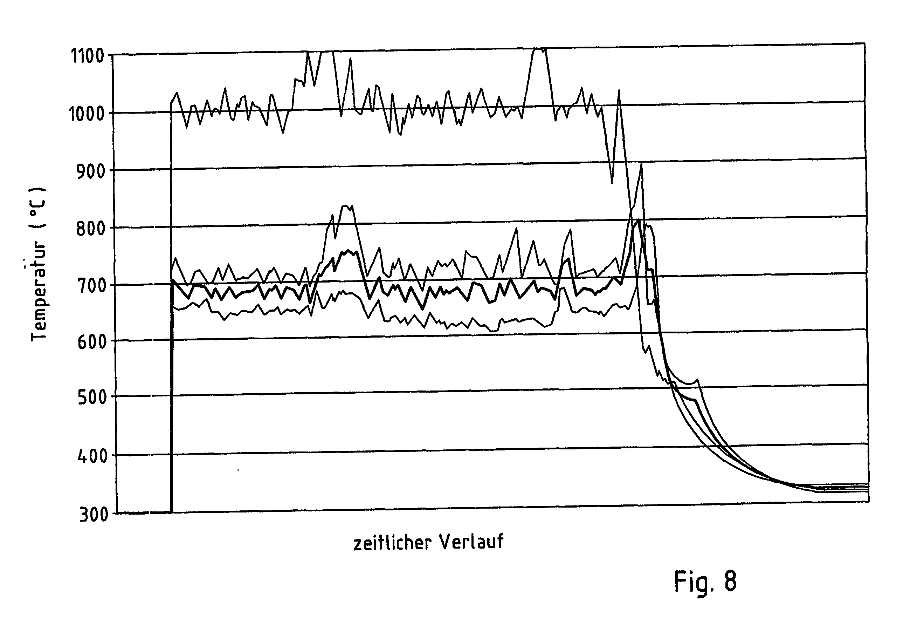

Bei dem Diagramm der Figur 8 liegen die zeitlichen Temperaturverläufe sowohl für die Schweißnaht als auch für die benachbarten Wärmeeinflußzonen oberhalb der Toleranz und schwanken sehr stark. Mit derart starken Temperaturschwankungen läßt sich keine einwandfreie Schweißnaht erzielen. Der oberhalb der Toleranz liegende Schweißstrom mit Spitzen ist charakteristisch für Materialan- bzw. -aufbackungen des Schweißrades. In diesem Fall schafft Wechsel des Schweißrades Abhilfe.

## Patentansprüche

1. Verfahren zur Online-Prüfung der Qualität einer Rollschweißnaht (3) von miteinander verbundenen Blechen (4,5), bei dem
a) mit einem ersten Pyrometer (Py2) die Temperatur eines in fester geometrischer Beziehung zum wandernden Schweißort gehaltenen und auf der Schweißnaht liegenden Meßbereiches erfaßt wird, ,
**dadurch gekennzeichnet , daß**
b) gleichzeitig mit einem zweiten und einem dritten Pyrometer (Py1,Py3) die Temperaturen von in fester geometrischer Beziehung zum wandernden Schweißort gehaltenen und unmittelbar daneben und beidseitig der Schweißnaht (3) außerhalb ihrer Aufschmelzzone liegenden Meßbereichen erfaßt werden, die in von der Schweißwärme beeinflußten Zonen (6,7) liegen, und
c)und die Temperaturmeßwerte der einzelnen Pyrometer jeweils durch Vergleich mit entsprechenden Sollwerten und unter Heranziehung charakteristischer Temperaturverlaufmuster für qualitativ einwandfreie Schweißnähte und zusätzlich die des zweiten und dritten Pyrometers durch Vergleich ihre Verläufe ausgewertet werden; wobei Fehler nach verschiedenen Typen unterschieden werden.

2. Verfahren nach Anspruch 1,
**dadurch gekennzeichnet , daß** das zweite und dritte Pyrometer in bezug auf die Schweißnaht derart positioniert und eingestellt werden, daß bei fehlerfreien Schweißnähten die Verläufe der Temperaturmeßwerte einen Schnittpunkt haben.

3. Verfahren nach Anspruch 1 oder 2,
**dadurch gekennzeichnet , daß** bei der Auswertung aus den Temperaturmeßwerten des zweiten und dritten Pyrometers (Py1,Py3) ein Mittelwert gebildet wird.

4. Verfahren nach einem der Ansprüche 1 bis 3,
**dadurch gekennzeichnet, daß** die Meßbereiche einen mittleren Durchmesser von 3 bis 5 mm haben.

5. Verfahren nach einem der Ansprüche 1 bis 4,
**dadurch gekennzeichnet, daß** die Meßbereiche des zweiten und dritten Pyrometers (Py1, Py3) gleich groß sind.

6. Meßeinrichtung zur Online-Prüfung der Qualität einer Rollschweißnaht (3) von miteinander zu verbindenden Blechen (4,5) zur Durchführung des Verfahrens nach einem der Ansprüche 1 bis 5,
**dadurch gekennzeichnet, daß** ein Träger (1) für ein Schweißrad (2) einer Rollnahtschweißmachine drei Pyrometer (Py1,Py2,Py3) aufweist, von denen einer (Py2) auf die zu schweißende Naht (3) und die beiden anderen auf die der Schweißnaht (3) benachbarten Wärmeeinflußzonen (6,7) einstellbar sind und die ihre Temperaturmeßwerte die von unmittelbar daneben und beidseitig der Schweissnaht, ausserhalb ihrer Aufschmelzzone liegende Messbereichen erfasst werden an eine Auswerte- und Anzeigeeinrichtung (8) liefern.

7. Meßeinrichtung nach Anspruch 6,
**dadurch gekennzeichnet, daß** die Auswerte- und Anzeigeeinrichtung (8) in Abhängigkeit von dem Temperaturmeßwert des Pyrometers (Py2) für die Schweißnaht (3) ein Start-/Stopsignal für die Meßwertauswertung erzeugt.

## Claims

1. Method for the on-line quality control of a roll weld seam (3) of assembled sheets (4, 5), wherein
a) the temperature of a measurement region located on the weld seam and held in a fixed geometrical relationship to the migratory location of the weld is detected using a first pyrometer (Py2), **characterised in that**
b) the temperatures of measurement regions located directly adjacent to and on both sides of the weld seam (3), outside its melt zone, in zones (6, 7) affected by the weld heat, and held in a fixed geometrical relationship to the migratory location of the weld are simultaneously detected using a second and a third pyrometer (Py1, Py3), and
c) the temperature measured values of the individual pyrometers are evaluated, in each case, by comparison with corresponding setpoint values and with reference to characteristic model temperature profiles for qualitatively optimal weld seams, and in addition those of the second and third pyrometers are evaluated by comparison of their profiles, errors being distinguished according to various types.

2. Method according to Claim 1, **characterised in that** the second and third pyrometers are positioned and adjusted with respect to the weld seam in such a way that if the weld seams are error-free, the profiles of the temperature measured values have a point of intersection.

3. Method according to either Claim 1 or Claim 2, **characterised in that** in the evaluation, a mean value is formed from the temperature measured values of the second and third pyrometers (Py1, Py3).

4. Method according to any one of Claims 1 to 3, **characterised in that** the measurement regions have an average diameter from 3 to 5 mm.

5. Method according to any one of Claims 1 to 4, **characterised in that** the measurement regions of the second and third pyrometers (Py1,Py3) are identical in size.

6. Measuring apparatus for the on-line quality control of a roll weld seam (3) of sheets (4, 5) to be assembled, for carrying out the method according to any one of Claims 1 to 5, **characterised in that** a carrier (1) for a welding wheel (2) of a roll seam welding machine comprises three pyrometers (Py1, Py2, Py3), of which one (Py2) is adjustable to the seam (3) to be welded, and the other two are adjustable to the heat affected zones (6, 7) adjacent to the weld seam (3), and which deliver their temperature measured values, which are detected by measurement regions located directly adjacent to and on both sides of the weld seam, outside its melt zone, to an evaluation and display device (8).

7. Measuring apparatus according to Claim 6, **characterised in that** the evaluation and display device (8) produces a start/stop signal for the evaluation of the measured values as a function of the temperature measured value of the pyrometer (Py2) for the weld seam (3).

## Revendications

1. Procédé pour le contrôle en direct d'un cordon de soudure à la molette (3) de tôles (4, 5) reliées ensemble, dans lequel,
a) avec un premier pyromètre (Py2), la température d'un domaine de mesure, maintenu en relation géométrique fixe par rapport au point de soudure mobile, et situé sur le cordon de soudure, est captée,
**caractérisé en ce que**
b) simultanément, avec un deuxième et un troisième pyromètre (Py1, Py3), sont captées les températures des domaines de mesure maintenus en relation géométrique fixe par rapport au point de soudure mobile et situés directement à côté et de part et d'autre du cordon de soudure (3), en dehors de sa zone de fusion, lesquels sont situés dans des zones (6, 7) influencées par la chaleur de soudage, et que
c) les valeurs de température mesurées des différents pyromètres sont respectivement évaluées par comparaison avec des valeurs de consigne associées et en utilisant des modèles de profils de température caractéristiques pour des cordons de soudure de qualité impeccable et que, de plus, celles du deuxième et du troisième pyromètre sont évaluées par comparaison de leurs profils, des anomalies étant différenciées selon des types différents.

2. Procédé selon la revendication 1,
**caractérisé en ce que**
le deuxième et le troisième pyromètre sont positionnés et réglés, par rapport au cordon de soudure, de telle manière que, lors de cordons de soudure impeccables, les profils des valeurs de température mesurées présentent un point d'intersection.

3. Procédé selon revendication 1 ou 2,
**caractérisé en ce que**,
lors de l'évaluation à partir des valeurs de température mesurées du deuxième et du troisième pyromètre (Py1, Py3), une valeur moyenne est formée.

4. Procédé selon l'une des revendications 1 à 3,
**caractérisé en ce que**
les zones de mesure présente un diamètre moyen de 3 à 5 mm.

5. Procédé selon l'une des revendications 1 à 4,
**caractérisé en ce que**
les zones de mesure du deuxième et du troisième pyromètre (Py1, Py3) sont de même grandeur.

6. Dispositif de mesure pour le contrôle en direct de la qualité d'un cordon de soudure à la molette (3) de tôles (4, 5) reliées ensemble, servant à la réalisation du procédé selon l'une des revendications 1 à 5,
**caractérisé en ce que**
un support (1) pour une molette (2) d'une machine de soudage à la molette présente trois pyromètres (Py1, Py2, Py3) qui peuvent être ajustés, l'un (Py2) sur le cordon e soudure (3) et les deux autres sur les zones voisines soumises à l'influence de la chaleur (6, 7), et qui délivrent à une unité d'évaluation et d'affichage (8) leurs valeurs de températures mesurées, captées dans des zones de mesure directement voisines et situées des deux côtés du cordon de soudure en dehors de sa zone de fusions.

7. Dispositif de mesure selon la revendication 6,
**caractérisé en ce que**
le dispositif d'évaluation et d'affichage (8) génère, en fonction de la valeur de température mesurée du pyromètre (Py2), pour le cordon de soudure (3), un signal de démarrage / d'arrêt pour l'évaluation de la valeur mesurée.
